# EUROPEAN PATENT APPLICATION

(11) **EP 2 424 204 A1**
(43) Date of publication of application: **29.02.2012**
(21) Application number: 09846065.2
(22) Date of filing: 21.12.2009
(51) Int. Cl.: H04M 3/42

(54) **SYSTEM AND METHOD FOR PROCESSING EXTENSION TRAFFIC IN VIRTUAL SWITCHBOARD, AND VIRTUAL SWITCHBOARD SERVER**

(30) Priority: 16.10.2009 CN 200910204888
(71) Applicant: ZTE Corporation, Shenzhen, Guangdong 518057 (CN)
(72) Inventor: YANG, Cuiping, Shenzhen Guangdong 518057 (CN)
(74) Representative: Lampis, Marco
(86) International application number: PCT/CN2009/075807
(87) International publication number: WO 2010/145151

(57) **Abstract**

The invention discloses a system and method for processing extension traffic in a virtual switchboard, and a virtual switchboard server, wherein the virtual switchboard server connected to an intelligent network comprises a user management unit, a call control unit and a service control unit. The method comprises: when a calling phone calls a first extension in a group, connecting a speech path between the calling phone and the first extension; when the incoming call is required to be transferred to a second extension in the group, receiving a transfer instruction sent from the first extension or the second extension; and control the call control unit to transfer the incoming call from the first extension to the second extension after the user management unit obtains the extension information of the second extension in the transfer instruction, and realize talking between the calling phone and the second extension. The invention allows call transfer and pickup of extensions in a group to be more convenient and timely and be not restricted by regions.

## Description

### Technical Field

The present invention relates to the field of communication, and in particular, to a system for processing extension traffic in a virtual switchboard, a virtual switchboard server, and a method for processing extension traffic in a virtual switchboard.

### Background Art

In the current communication field, an enterprise switchboard is generally implemented by a stored-program control (SPC) exchange, or a switchboard server connected to a communication operator's exchange. Traffic pickup inside an enterprise is quite convenient when users in the enterprise are comparatively concentrated. For large enterprises, different offices or branches are generally established in different regions or cities such that their office places are not concentrated and extensions cannot be moved freely. In such case, the current traffic pickup mode has some defects. There are two scenarios where a user uses an enterprise switchboard. In the first scenario, a user A dials an extension of an employee B whom he needs to find, when the employee B is not in his seat and other colleague helps to pickup the phone, and if the employee B is not in the office, for example, he goes to offices or branches in other cities on business, then the user A cannot talk with the employee B, and his dialing demand cannot be met. In the second scenario, a user A dials an extension of an employee B who is not beside the extension, after hearing the ringing, the employee B has to run to answer the phone if there is no extension connected to a SPC exchange or a switchboard server beside him, it is possible that the phone has been interrupted before he reaches the position of the phone, resulting in the non answering of the phone. After the extension fails to be connected or answered, the system will release the call after providing the user A with a voice prompt. In both cases, the calling purpose of the user A is not achieved, possibly causing the user A to achieve the communication purpose only through multiple dialings, which not only wastes the user A's time but also possibly causes the employee B to miss important information, resulting in loss of the enterprise. Therefore, the current enterprise switchboard has defect of inconvenience of extension transfer or pickup for large enterprises with dispersed office places.

### Summary of the Invention

The technical problem to be solved in the present invention is to provide a system for processing extension traffic in a virtual switchboard, a virtual switchboard server, and a method for processing extension traffic in a virtual switchboard in order to solve the problem of inconvenience of extension transfer or pickup existing in the prior art.

In order to solve the above technical problem, in one aspect, the present invention provides a system for processing extension traffic in a virtual switchboard comprising a virtual switchboard server connected to an intelligent network; the virtual switchboard server further comprises a user management unit, a call control unit and a service control unit, wherein
the user management unit is configured to obtain extension information of a second extension in a transfer instruction;
the call control unit is configured to implement talking under control of the service control unit; and
the service control unit is configured to, when a calling phone calls the first extension in a group, control the call control unit to connect a speech path between the calling phone and a first extension; when the incoming call is required to be transferred to the second extension in the group, receive the transfer instruction sent from the first extension or the second extension, control the call control unit to transfer the incoming call from the first extension to the second extension after the user management unit obtains the extension information of the second extension in the transfer instruction, and realize talking between the calling phone and the second extension.

In another aspect, the present invention further provides a virtual switchboard server comprising a user management unit, a call control unit and a service control unit; wherein
the user management unit is configured to obtain extension information of a second extension in a transfer instruction;
the call control unit is configured to implement talking under control of the service control unit; and
the service control unit is configured to, when a calling phone calls the first extension in a group, control the call control unit to connect a speech path between the calling phone and a first extension; when the incoming call is required to be transferred to the second extension in the group, receive the transfer instruction sent from the first extension or the second extension, control the call control unit to transfer the incoming call from the first extension to the second extension after the user management unit obtains the extension information of the second extension in the transfer instruction, and realize talking between the calling phone and the second extension.

The service control unit is further configured to determine, after the first extension sends out the transfer instruction, that the first extension is required to transfer the incoming call to the second extension based on the transfer instruction, and determine, after the second extension sends out the transfer instruction, that the second extension is required to answer the incoming call based on the transfer instruction.

The service control unit is further configured to determine, after the second extension sends out the transfer instruction, that the first extension does not agree to transfer the incoming call to the second extension, control the call control unit to maintain the speech path between the calling phone and the first extension during the transferring; and connect the speech path between the calling phone and the second extension after determining that the first extension agrees to transfer the incoming call to the second extension.

The call control unit is further configured to connect the speech path between the calling phone and the second extension using a redirection manner.

In still another aspect, the present invention further provides a method for processing extension traffic in a virtual switchboard comprising the following steps of:
when a calling phone calls a first extension in a group, connecting a speech path between the calling phone and the first extension;
when the incoming call is required to be transferred to a second extension in the group, receiving a transfer instruction sent from the first extension or the second extension; and
obtaining extension information of the second extension based on the transfer instruction, transferring the incoming call from the first extension to the second extension and realizing talking between the calling phone and the second extension.

The incoming call being required to be transferred to a second extension in the group comprises the incoming call being required to be transferred to the second extension when the first extension is not answered.

Accordingly, the method further comprises transferring the incoming call to the second extension after the second extension sends out the transfer instruction.

The incoming call being required to be transferred to the second extension in the group comprises the incoming call being required to be transferred to the second extension after the first extension is answered.

Accordingly, the method further comprises transferring the incoming call to the second extension after the first extension sends out the transfer instruction.

The incoming call being required to be transferred to the second extension in the group comprises the incoming call being required to be transferred to the second extension after the first extension is answered.

Accordingly, the method further comprises transferring the incoming call to the second extension after the second extension sends out the transfer instruction.

After the second extension sends out the transfer instruction, the method further comprises:
connecting the speech path between the calling phone and the second extension after determining that the first extension agrees to transfer the incoming call to the second extension;
maintaining the speech path between the calling phone and the first extension after determining that the first extension does not agree to transfer the incoming call to the second extension.

The beneficial effects of the present invention will be described below.

By using the system for processing extension traffic constructed by the intelligent network and the virtual switchboard server, both the first extension, i.e., the answering extension, and the second extension, i.e., the extension to which the incoming call is required to be transferred, can send out the transfer instruction so as to make call transfer and pickup of extensions in the group more convenient and timely. In addition, Extensions in the group are connected to the virtual switchboard server by the communication network such that transfer between extensions and pickup are not limited to the a Local Area Network and are not restricted by regions, thereby increasing the efficiency of communication between the enterprise and the external world, improving convenience and purposefulness of communication, and decreasing the probability of loss of commercial opportunities, and further providing guarantee for improvement of benefits of the enterprise.

### Brief Description of Drawings

FIG. 1 illustrates a structural diagram of a virtual switchboard server according to the first example of the present invention;
FIG. 1a illustrates a structural diagram of a system for processing extension traffic in a virtual switchboard according to the first example of the present invention;
FIG. 2 is a flow chart of a method for processing extension traffic in a virtual switchboard according to the second example of the present invention;
FIG. 3 is a flow chart of a method for processing extension traffic in a virtual switchboard according to the third example of the present invention;
FIG. 4 is a flow chart of a method for processing extension traffic in a virtual switchboard according to the fourth example of the present invention; and
FIG. 5 is a flow chart of a method for processing extension traffic in a virtual switchboard according to the fifth example of the present invention.

### Specific Embodiments

### The first example:

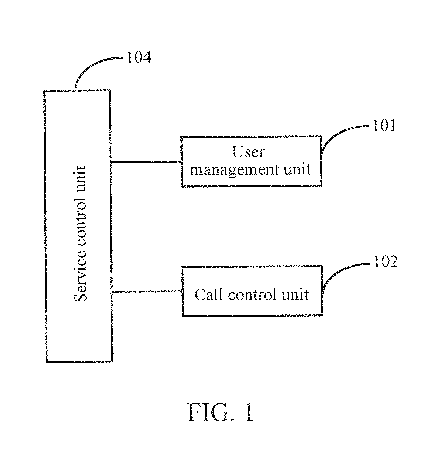

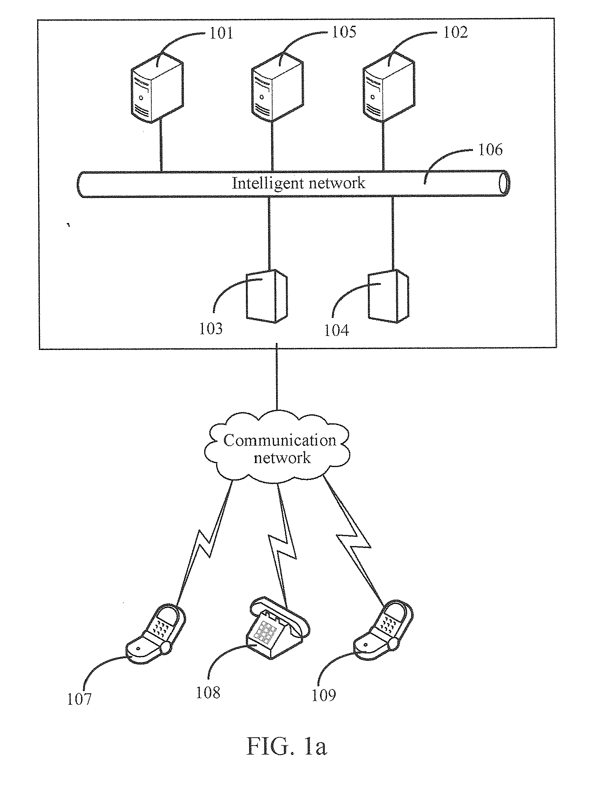

FIG. 1 illustrates a structural diagram of a virtual switchboard server according to the first example of the present invention. As shown in FIG. 1, the virtual switchboard server in accordance with this example comprises a user management unit 101, a call control unit 102 and a service control unit 104.

The user management unit 101 is configured to mange an address list containing information of each extension in a group. Each piece of extension information in the address list includes an extension number of the extension, a name of an extension user, position information of the extension, and an actual telephone number corresponding to the extension number. For example, if the extension number of Zhang San in Beijing is 8012, and the actual telephone number corresponding to 8012 is 010-12345678, then the extension information includes 8012, Zhang San, Beijing and 010-12345678. If Zhang San often goes to Shanghai on business, and his enterprise sets an extension number 8013 for him in Shanghai in the virtual switchboard server, then Zhang San also corresponds to another piece of extension information in Shanghai containing 8013, Zhang San, Shanghai and 021-87654321. In addition, in order to solve the problem of non unique name between users, each piece of extension information may further contain personal information of the user, for example, it contains information such as a work number, i.e., work card number, the affiliated department, sex of the extension user. Any information that can identify the user belongs to personal information of the user and will not be listed in detail herein. The above numbers 010-12345678 and 021-87654321 are both hypothetical numbers not real numbers, which are only used for explanation and illustration.

The call control unit 102 is configured to transfer the incoming call from the first extension to the second extension when a calling phone calls the first extension, and the first extension is not answered or the incoming call is required to be transferred to the second extension after the first extension is answered. The call control unit 102 controls the connection between the calling phone and the extensions, control signaling flow of talking between the calling phone and the extensions or between the extensions so that the talking between the calling phone and the designated extension can be achieved. In broadband services, the above purpose can be achieved by using invite and reinvite messages in SIP (Session Initiation Protocol).

The service control unit 104 is configured to control the user management unit 101 and the call control unit 102 to process data when the calling phone calls, and realize the talking between the calling phone and the second extension.

FIG. 1a illustrates a structural diagram of a system for processing extension traffic in a virtual switchboard according to the first example of the present invention. The system for processing extension traffic in the virtual switchboard in accordance with this example includes a virtual switchboard server connected to an intelligent network 106. Each extension of the virtual switchboard is connected to the IP (Internet Protocol) network based virtual switchboard server through a communication network. Each extension may be a fixed telephone, or a mobile phone. The communication network may be a PHS (Personal Handy-phone System) network, a GSM (Global System for Mobile Communications) network, or a CDMA (Code Division Multiple Access) network. The system for processing extension traffic in the virtual switchboard in accordance with this example further includes a media processing unit 103, which is configured to process media during the talking between the calling phone and the extension in the group. The media processing includes collecting and decoding of DTMF (Dual Tone Multi Frequency) signals, generation and sending of signal tone, sending of sound recording notification, conversion between different coding and decoding algorithms, etc.

Specific controls will be described now. A user 107 calls a virtual switchboard. After an calling phone calls and the call is connected, the service control unit 104 controls the media processing unit 103 to play recordings to prompt the user to dial the extension number. For example, the recording content is "Thank you for calling XXX company, please dial extension number or dial 0 for operator". After the calling phone dials the extension number of the first extension 108, the service control unit 104 controls the call control unit 102 to establish a call between the first extension 108 and the user 107 so as to connect a speech path between a calling subscriber and a called subscriber and realize a calling request of the calling subscriber.

If the first extension 108 is not answered, the second extension 109 beside the first extension 108 sends out a transfer instruction by dialing a second set number to request the incoming call to be transferred to the second extension 109. The second set number may be set to be a connecting code + the extension number of the first extension 108, wherein the connecting code may be *, or #, or other combined codes. For example, if the connecting code is #, and the extension number of the first extension 108 is 6001, then the second set number is #6001. After the second extension sends out the transfer instruction, the call initiated by the second extension 109 will be transferred to the service control unit 104 by the call control unit 102. The service control unit 104 extracts the extension number of the second extension from the second set number, and then controls the user management unit 101 to obtain the actual telephone number of the second extension 109. After the user management unit 101 queries extension information corresponding to the second extension 109 from the server 105 and obtains the actual telephone number of the second extension 109, a message containing the actual telephone number of the second extension 109 is sent to the service control unit 104. The service control unit 104 controls the call control unit 102 to send an information message and transfers the current call to the first extension 108 to the second extension 109, at which moment, the user 107 talks with a person at the second extension 109. The call control unit 102 controls the connection between the user and the extension using a SIP redirection manner in the broadband technique, and controls the signaling flow of talking between the user and the extension and between extensions such that the talking between user and the designated extension can be achieved. In addition, the employee of the enterprise can set his own mobile phone as the second extension 109. Thus, when the first extension 108 rings, if he is too far away from his telephone, he can dial the second set number directly on his mobile phone to answer the call, thereby avoiding the occurrence of the problem that the incoming call has been hung up when he goes back to the first extension.

After the answerer of the first extension 108 answers the call, if he finds that he is not the object whom the user 107 wants to talk with and the call is required to be transferred to his colleague, then he gets the name of the object whom the user 107 wants to talk with after communicating with the user 107. After getting the name of his colleague, there are two processing methods. The first one will be described now. By accessing the user management unit 101 through a client terminal installed on an computing device of a computer, the extension information of the second extension 109 corresponding to the object whom the user 107 wants to talk with is queried from the sever 105 to obtain the extension number of the second extension109. The first extension 108 sends out a transfer instruction by dialing the first set number to request the incoming call to be transferred to the second extension 109. The first set number may be set to be a connecting code + the extension number of the second extension 109, wherein the connecting code may be *, or #, or other combined codes. For example, if the connecting code is #, and the extension number of the second extension 109 is 7001, then the first set number is #7001. After the first extension 108 sends out the transfer instruction, the media processing unit 103 analyzes key-press information of the first extension 108 and then sends the analyzed information to the service control unit 104. The service control unit 104 extracts the extension number of the second extension 109 from the first set number, and then controls the user management unit 101 to obtain the actual telephone number of the second extension 109. After the user management unit 101 queries the extension information corresponding to the second extension 109 from the server 105 to obtain the actual telephone number of the second extension 109, it sends a message containing the actual telephone number of the second extension 109 to the service control unit 104. The service control unit 104 controls the call control unit 102 to send an information message and transfers the current call to the first extension 108 to the second extension 109, at which moment, the user 107 talks with the person at the extension 109.

Another processing method will be described now. The answerer of the first extension 108 does not find the extension number of his colleague, or the colleague is off on a business trip or is out and his extension is not answered. In this case, the answerer of the first extension 108 can inform the colleague in time that he is being called. Means for informing him includes mobile phone; instant messaging software, such as QQ, MSN, Fetion; E-mail; group sending message in internal forum of the enterprise, etc. For example, the user 107 wants to talk with Li Si who works in Beijing and whose extension number is the extension number corresponding to Beijing, and Li Si is currently on business in Shanghai branch and his extension number in Shanghai is not set in the virtual switchboard. Li Si can receive E-mails and login on the instant messaging software through a computer in Shanghai. The answerer of the first extension 108 informs Li Si by sending him an E-mail or sending a group message to all users within a group through the instant messaging software that currently he is being called, and tells him his own extension number in the same time. Thus, after Li Si sees the message, he can dial the second set number through the second extension 109 of his colleague in Shanghai to send out a transfer instruction to request the incoming call to be transferred to the second extension 109. After the second extension 109 sends out the transfer instruction, the call initiated by the second extension 109 will be transferred to the service control unit 104 by the call control unit 102. The service control unit 104 extracts the extension number of the second extension 109 from the second set number, and then controls the user management unit 101 to obtain the actual telephone number of the second extension 109. After the user management unit 101 queries the extension information corresponding to the second extension 109 from the server 105 to obtain the actual telephone number of the second extension 109, it sends a message containing the actual telephone number of the second extension 109 to the service control unit 104. The service control unit 104 controls the call control unit 102 to send an information message and transfers the current call to the first extension 108 to the second extension 109, at which moment, the user 107 talks with Li Si.

### The second example:

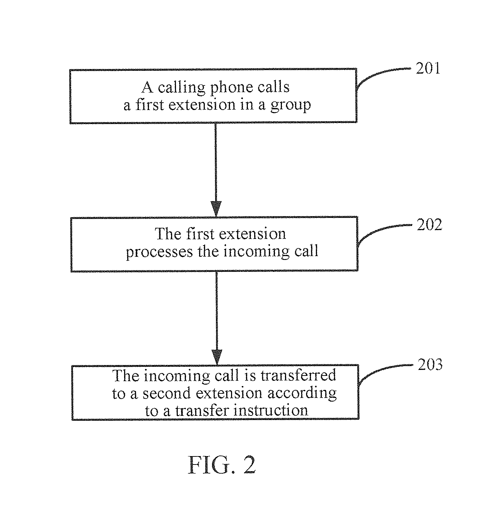

As shown in FIG. 2, the second example of the present invention relates to a method for processing extension traffic in a virtual switchboard. The method is applied to a virtual switchboard system connected to an intelligent network. This example includes the following steps.

Step 201: a calling phone calls a first extension in a group.

Step 202: the first extension processes the incoming call.

Herein, the processing has two possibilities, i.e., the incoming call is answered and not answered. Because this example is mainly used to solve the defect of inconvenience of extension transfer or pickup in a group, normal talking between the calling phone and the first extension will not be described in this example. Therefore, there are two cases, one case where the first extension is not answered, i.e., pickup is required, and the other case where the incoming call is found to be required to be transferred to a second extension after answered, i.e., transfer is required.

Step 203: for both cases, the incoming call is transferred to the second extension to realize transferring or pickup of the incoming call according to a transfer instruction.

Herein, step 203 is specifically described. When the first extension is not answered, a transfer instruction is sent out by dialing a second set number on the second extension, and the incoming call of the first extension is transferred to the second extension to realize pickup of the call. When the answerer of the first extension finds that the incoming call is required to be transferred to the second extension after answering the incoming call, a transfer instruction is sent out by dialing a first set number on the first extension, or by dialing a second set number on the second extension such that the incoming call to the first extension is transferred to the second extension to realize pickup of the call.

The first extension and the second extension may be extensions in the same office place, or may be extensions in different regions or cities. In addition, the first extension and the second extension may be fixed phones or mobile phones. Thus, call transfer between different regions or cities is achieved. Under the premise that currently the fluidity of employees is becoming larger and larger due to business trips, the probability of call missing is reduced as much as possible, thereby further decreasing the probability of loss of the enterprise due to call missing, and providing guarantee for development of the enterprise.

### The third example:

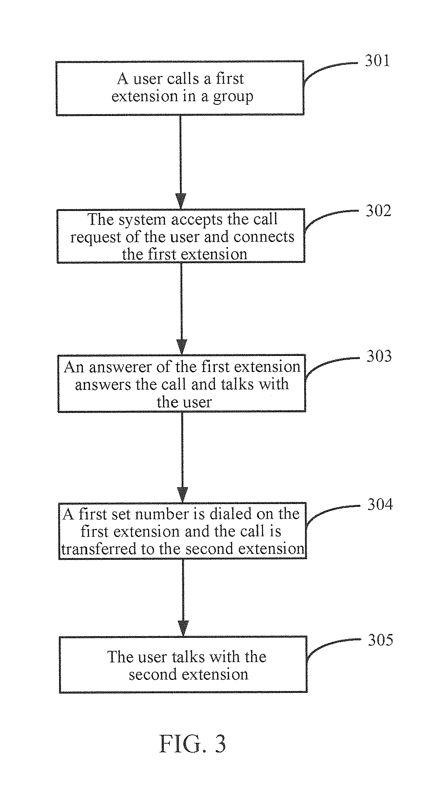

As shown in FIG. 3, the third example of the present invention relates to a method for processing extension traffic in a virtual switchboard. This example comprises the following steps.

Step 301, a user calls a first extension in a group.

Step 302, the system accepts the call request of the user and connects the first extension.

Step 303, after answering the first extension and talking with the user, an answerer of the first extension finds that the person whom the user wants to look for is not him but his colleague. The answerer of the first extension finds the extension information of the colleague with whom the user wants to talk through an internal information query system of the enterprise.

Step 304, the answerer of the first extension sends out a transfer instruction by dialing a first set number on the first extension to request the system to transfer the user's call to the first extension to the second extension of his colleague.

Herein, the first set number may be set to be a connecting code + the extension number of the second extension.

Step 305, after receiving the request of the first extension, the system transfers the user's call to the first extension to the second extension such that the user can talk with the second extension, thereby achieving the talking purpose of the user.

The specific example of the above method will be described now. The user dials the first extension A9001 in Shenzhen, the extension number of which is 9001, an employee A beside the first extension picks up the phone and talks with the user. The employee A finds, during the talking, that the user wants to look for an employee B in Shanghai branch, whose extension number is 9002. Then the employee A dials #9002 on the first extension to transfer the call. The second extension 9002 rings, the employee A hangs up the phone and then employee B talks with the user normally.

### The fourth example:

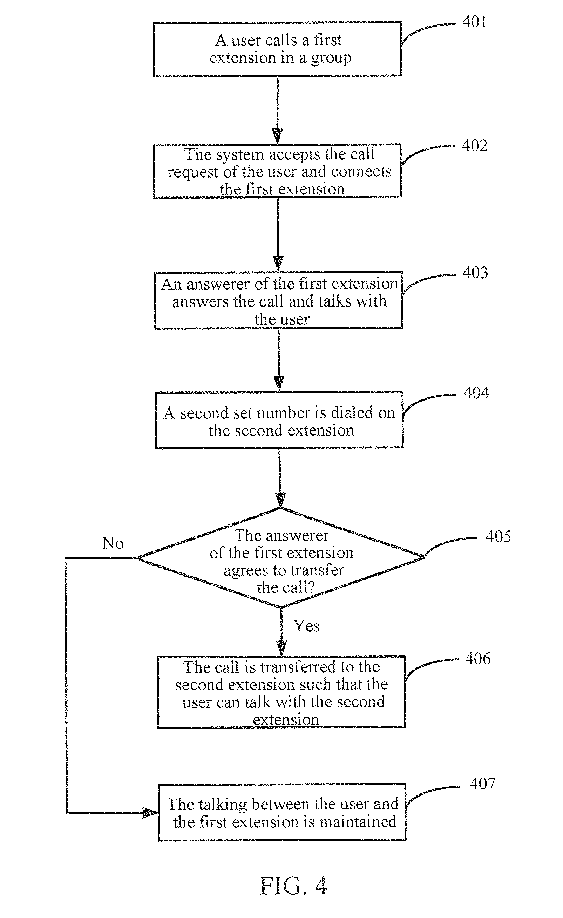

As shown in FIG. 4, the fourth example of the present invention relates to a method for processing extension traffic in a virtual switchboard. This example comprises the following steps.

Step 401, a user calls a first extension in a group.

Step 402, the system accepts the call request of the user and connects the first extension.

Step 403, an answerer of the first extension answers the call and talks with the user.

Then, the answerer finds, during the talking, that the one whom the user wants to look for is not him but his colleague. The answerer of the first extension finds the extension information of the colleague with whom the user wants to talk through an internal information query system of the enterprise. Thus, the answerer of the first extension can inform the colleague with whom the user wants to talk that him is being called and tell the colleague his own extension number. Means for informing him includes mobile phone; instant messaging software, such as QQ, MSN, Fetion; E-mail; group sending message in internal forum of the enterprise, etc.

Step 404, a second set number is dialed on the second extension.

Herein, the specific processing procedure in step 404 will be described now. After the colleague with whom the user wants to talk sees the message sent by the answerer of the first extension, he sends out a transfer instruction by dialing a second set number on the second extension to request the system to transfer the user's call to the first extension to the second extension. The second set number may be set to be a connecting code + the extension number of the first extension.

Step 405, after receiving the request of the second extension to transfer the call, the system provides a voice prompt for the first extension such that the answerer of the first extension can determine whether to agree to transfer the call, and if yes, step 406 is performed; otherwise, step 407 is performed.

Step 406, the system transfers the user's call to the first extension to the second extension such that the user can talk with the second extension, thereby achieving the talking purpose of the user.

Step 407, the system maintains the talking between the user and the first extension.

In the above steps, the system prompts the answerer of the first extension whether to agree to transfer the call in order to prevent the user of the second extension from making a mistake when dialing the second set number, thus making a wrong transfer. For example, the second set number is #8567, but the user of the second extension dials #8657 instead, thus, the second extension requests the system to transfer the call to the extension with the extension number being 8657 to the second extension. If, at this moment, the extension with the extension number being 8657 is talking, transferring this talking is obviously wrong. Therefore, the system broadcast a voice prompt that the extension with the extension number being 8657 does not agree to transfer the talking to ensure the normal talking of this extension. Then the second extension can request to transfer the call by redialing the correct second set number.

The specific example of the above method will be described now. The user dials the first extension A8001 in Beijing, the extension number of which is 8001, an employee A beside the first extension picks up the phone and talks with the user. He finds, during the talking, that the user wants to look for an employee B who is on a business trip in Tianjin branch. The employee B does not have an extension number in Tianjin, then the employee A uses network or mobile phone to inform the employee B that he is being called, and tells the employee B his own extension number. After knowing that he is being called, the employee B directly dials #8001 on a second extension beside him. After obtaining the agreement of the employee A, the system actively releases the call of the user to the first extension, and connects the call of the user to the second extension.

### The fifth example:

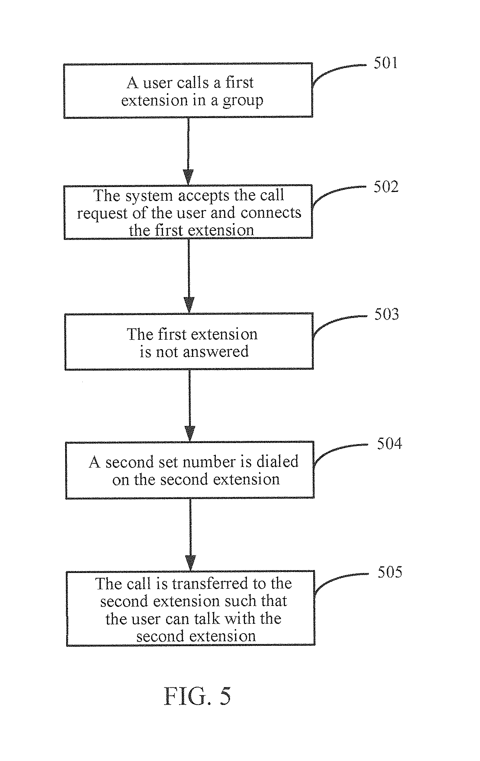

As shown in FIG. 5, the fifth example of the present invention relates to a method for processing extension traffic in a virtual switchboard comprising the following steps.

Step 501, a user calls a first extension in a group.

Step 502, the system accepts the call request of the user and connects the first extension.

Step 503, the first extension is not answered.

Step 504, a second set number is dialed on the second extension.

Herein, the specific processing procedure of step 504 will be described now. An employee beside the first extension, or a user of the first extension dials the second set number on the second extension to send out a transfer instruction to request the system to transfer the user's call to the first extension to the second extension. The second set number may be set to be a connecting code + the extension number of the first extension. The user of the first extension is a user who is relatively far from the first extension when the phone rings.

Step 505, the system transfers the user's call to the first extension to the second extension such that the user can talk with the second extension, thereby achieving the talking purpose of the user.

The specific example of the above steps will be described now. The user dials the first extension 7001, the extension number of which is 7001, the first extension rings. During the ringing, the employee B beside the second extension dials #7001 on the second extension to intercept the traffic of the first extension and directly talk with the user, thus achieving traffic pickup. In addition, when the first extension rings, the user of the first extension, i.e., the employee A, may be relatively far from the first extension and thus cannot pick up the phone. So he can use the second extension beside him to dial #7001 to intercept the traffic of the first extension and directly talk with the user. He can also set his mobile phone as the second extension, and dial #7001 on the mobile phone to intercept the traffic of the first extension and directly talk with the user.

It can be seen from the above examples that by using a system for processing extension traffic constructed by an intelligent network and a virtual switchboard server and using the broadband technique, the present invention allows call transfer and pickup of extensions in a group to be more convenient and timely and be not restricted by regions, thereby increasing the efficiency of communication between the enterprise and the external world, improving convenience and purposefulness of communication, and decreasing the probability of loss of commercial opportunities, and further providing guarantee for improvement of benefits of the enterprise. In addition, the hardware on which the broadband technique depends is less expensive, and all speech paths, including local and long-distance speech paths, are implemented based on IP bearing, thus greatly reducing costs of operation.

Although preferred examples of the present invention are disclosed for the purpose of illustration, those skilled in the art will appreciate that various improvement, additions and substitutions are also possible. Therefore, the scope of the present invention is not limited to the above examples.

## Claims

1. A system for processing extension traffic in a virtual switchboard comprising a virtual switchboard server connected to an intelligent network; wherein the virtual switchboard server further comprises a user management unit, a call control unit and a service control unit, wherein
the user management unit is configured to obtain extension information of a second extension in a transfer instruction;
the call control unit is configured to implement talking under control of the service control unit; and
the service control unit is configured to, when a calling phone calls the first extension in a group, control the call control unit to connect a speech path between the calling phone and a first extension; when the incoming call is required to be transferred to the second extension in the group, receive the transfer instruction sent from the first extension or the second extension, control the call control unit to transfer the incoming call from the first extension to the second extension after the user management unit obtains the extension information of the second extension in the transfer instruction, and realize talking between the calling phone and the second extension.

2. A virtual switchboard server comprising a user management unit, a call control unit and a service control unit; wherein
the user management unit is configured to obtain extension information of a second extension in a transfer instruction;
the call control unit is configured to implement talking under control of the service control unit; and
the service control unit is configured to, when a calling phone calls the first extension in a group, control the call control unit to connect a speech path between a calling phone and a first extension; when the incoming call is required to be transferred to the second extension in the group, receive the transfer instruction sent from the first extension or the second extension, control the call control unit to transfer the incoming call from the first extension to the second extension after the user management unit obtains the extension information of the second extension in the transfer instruction, and realize talking between the calling phone and the second extension.

3. The virtual switchboard server according to claim 2, wherein
the service control unit is further configured to determine, after the first extension sends out the transfer instruction, that the first extension is required to transfer the incoming call to the second extension based on the transfer instruction, and determine, after the second extension sends out the transfer instruction, that the second extension is required to answer the incoming call based on the transfer instruction.

4. The virtual switchboard server according to claim 2, wherein the service control unit is further configured to determine, after the second extension sends out the transfer instruction, that the first extension does not agree to transfer the incoming call to the second extension, control the call control unit to maintain the speech path between the calling phone and the first extension during the transferring, and connect the speech path between the calling phone and the second extension after determining that the first extension agrees to transfer the incoming call to the second extension.

5. The virtual switchboard server according to claim 4, wherein the call control unit is further configured to connect the speech path between the calling phone and the second extension using a redirection manner.

6. A method for processing extension traffic in a virtual switchboard comprising the following steps of:
when a calling phone calls a first extension in a group, connecting a speech path between the calling phone and the first extension;
when the incoming call is required to be transferred to a second extension in the group, receiving a transfer instruction sent from the first extension or the second extension; and
obtaining extension information of the second extension based on the transfer instruction, transferring the incoming call from the first extension to the second extension and realizing talking between the calling phone and the second extension.

7. The method according to claim 6, wherein the incoming call being required to be transferred to a second extension in the group comprises the incoming call being required to be transferred to the second extension when the first extension is not answered;
accordingly, the method further comprises transferring the incoming call to the second extension after the second extension sends out the transfer instruction.

8. The method according to claim 6, wherein the incoming call being required to be transferred to the second extension in the group comprises the incoming call being required to be transferred to the second extension after the first extension is answered;
accordingly, the method further comprises transferring the incoming call to the second extension after the first extension sends out the transfer instruction.

9. The method according to claim 6, wherein the incoming call being required to be transferred to the second extension in the group comprises the incoming call being required to be transferred to the second extension after the first extension is answered;
accordingly, the method further comprises transferring the incoming call to the second extension after the second extension sends out the transfer instruction.

10. The method according to claim 9, wherein after the second extension sends out the transfer instruction, the method further comprises:
connecting the speech path between the calling phone and the second extension after determining that the first extension agrees to transfer the incoming call to the second extension;
maintaining the speech path between the calling phone and the first extension after determining that the first extension does not agree to transfer the incoming call to the second extension.
